# EUROPEAN PATENT APPLICATION

(11) **EP 4 765 681 A1**
(43) Date of publication of application: **24.06.2026**
(21) Application number: 24870974.3
(22) Date of filing: 27.09.2024
(51) Int. Cl.: H04B 10/25, H04B 10/40

(54) **OPTICAL MODULE, PHOTOELECTRIC INTEGRATED SEMICONDUCTOR STRUCTURE, AND OPTICAL SWITCHING SYSTEM**

(30) Priority: 28.09.2023 CN 202311281991
(71) Applicant: Shanghai Xizhi Technology Co., Ltd., Shanghai 201203 (CN)
(72) Inventor: SHEN, Yichen, Shanghai 201303 (CN); MENG, Huaiyu, Shanghai 201303 (CN); XU, Yelong, Shanghai 201303 (CN); ZHU, Jian, Shanghai 201303 (CN); SU, Zhan, Shanghai 201303 (CN); ZHANG, Weifeng, Shanghai 201303 (CN)
(74) Representative: Marks & Clerk LLP
(86) International application number: PCT/CN2024/121795
(87) International publication number: WO 2025/067437

(57) **Abstract**

An optical module (1000), a photoelectric integrated semiconductor structure, and an optical switching system. The optical module (1000) comprises: an electrical input/output interface (E-I/O); an optical input/output interface (O-I/O); a light emitting unit (100), which is used for converting an input electrical signal (110) received from the electrical input/output interface (E-I/O) into an output optical signal (120); a light receiving unit (200), which is used for converting an input optical signal (210) received from the optical input/output interface (O-I/O) into an output electrical signal (220); and a control unit (300), which is used for controlling the light emitting unit (100) to convert the input electrical signal (110) into the output optical signal (120), and controlling the light receiving unit (200) to convert the input optical signal (210) into the output electrical signal (220), wherein the input electrical signal (110) and the output electrical signal (220) are PCIe electrical signals.

## Description

This application claims priority to Chinese Patent Application No. 202311281991.0, filed September 28, 2023, the disclosure of which is incorporated herein by reference in its entirety.

### TECHNICAL FIELD

The present disclosure relates to the field of optical communications, and in particular to an optical module, a photonic-electronic integrated semiconductor structure and an optical switching system.

### BACKGROUND

In recent years, with the rapid development of artificial intelligence technology, cloud computing technology, virtual reality and augmented reality and other technologies, the demand for computing power in data centers has also increased exponentially. However, the architecture innovation and computing power improvement only for a single computing node cannot meet the growing large-scale computing power demand. Data centers generally need to deploy tens of thousands of computing devices, and the simple stacking and combination of multiple computing nodes often produce network congestion. In addition, the resource configuration of CPUs, GPUs, memories and the like inside servers of a data center is relatively fixed, but different computing tasks have different resource requirements. Therefore, once the hardware configuration of a data center is fixed, its utilization rate is relatively low for most of the time due to the inability to flexibly schedule computing power. A better approach is to integrate computing resources and allocate them to computing tasks in a flexible and efficient manner through refined management. This approach is generally referred to as resource pooling.

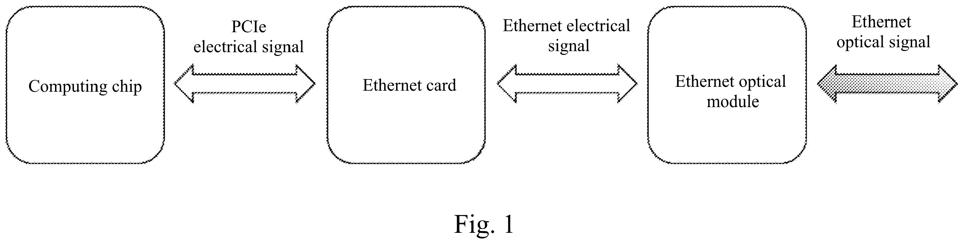

However, it is difficult for the current design of the infrastructure of data centers to support high-performance resource pooling due to the large physical distance between large-scale distributed computing devices. The current data communication between computing devices of a data center usually adopts the Ethernet protocol-based data communication. For example, as shown in Fig. 1, in this architecture, the PCIe electrical signal output by the computing chip of a computing device needs to undergo physical layer and protocol layer conversion through an Ethernet network card, so as to convert the PCIe electrical signal into an Ethernet electrical signal, and then provide the Ethernet electrical signal to an Ethernet optical module to realize electrical-to-optical conversion. The Ethernet optical signal output by the Ethernet optical module can be further provided to an Ethernet photonic-electronic switch or an optical switch. Vice versa, for example, the Ethernet optical signal from an Ethernet photonic-electronic switch or an optical switch can be provided to an Ethernet optical module for optical-to-electrical conversion, and the Ethernet electrical signal obtained from the Ethernet optical module can be further subjected to protocol conversion via an Ethernet network card, so as to obtain a PCIe electrical signal. The PCIe electrical signal can be further received by the computing chip of another computing device. Through the above manner, data exchange between different computing devices can be realized.

This configuration mode between computing devices is limited by the bandwidth of Ethernet data exchange and has high communication delay, so it is difficult for a data center to achieve nearly linear large-scale computing power expansion.

### SUMMARY

In view of the above problems, the present disclosure aims to provide an optical data exchange solution that directly uses PCIe electrical signals without performing Ethernet protocol conversion.

In one aspect, the present disclosure provides an optical module. The optical module comprises: an electrical input/output interface; an optical input/output interface; an optical transmitting unit configured to convert an input electrical signal received from the electrical input/output interface into an output optical signal; an optical receiving unit configured to convert an input optical signal received from the optical input/output interface into an output electrical signal; and a control unit configured to control the optical transmitting unit to perform a conversion of the input electrical signal into the output optical signal and control the optical receiving unit to perform a conversion of the input optical signal into the output electrical signal. The input electrical signal and the output electrical signal are PCIe electrical signals.

In some embodiments, the input electrical signal and the output electrical signal are PCIe electrical signals based on a physical layer of a PCIe interface on an external electronic integrated circuit chip or PCIe/CXL electrical signals based on the physical layer of the PCIe interface and a CXL protocol layer.

In some embodiments, the input electrical signal comprises a first data electrical signal. The first data electrical signal has one or more channels, and the optical transmitting unit comprises one or more transmitting channels configured to convert the first data electrical signal into a first data optical signal having one or more channels. The input optical signal comprises a second data optical signal. The second data optical signal has one or more channels, and the optical receiving unit comprises one or more receiving channels configured to convert the second data optical signal into a second data electrical signal having one or more channels.

In some embodiments, the input electrical signal further comprises a first control electrical signal, and the optical transmitting unit further converts the first control electrical signal into a first control optical signal. The input optical signal further comprises a second control optical signal, and the optical receiving unit further converts the second control optical signal into a second control electrical signal.

In some embodiments, the optical transmitting unit comprises a light emitter and a driver.

In some embodiments, the light emitter is a directly modulated laser, and the control unit controls an intensity of an optical signal emitted by the optical transmitting unit by controlling an electrical signal provided by the driver, to form the output optical signal.

In some embodiments, the light emitter is an externally modulated laser, and the optical transmitting unit further comprises a modulator. The control unit modulates light received from the light emitter by controlling an electrical signal input to the modulator, to form the output optical signal.

In another aspect, the present disclosure provides a photonic-electronic integrated semiconductor structure. The photonic-electronic integrated semiconductor structure comprises: the optical module as described above; an electronic integrated circuit chip; a package substrate which at least packages the electronic integrated circuit chip; and a PCB for arranging the package substrate. The electronic integrated circuit chip has a PCIe physical interface, and the PCIe physical interface of the electronic integrated circuit chip is directly electrically interconnected with the electrical input/output interface of the optical module. The PCB is further used to mount the optical module.

In some embodiments, a card slot is arranged at an edge of the PCB, and the optical module is pluggably arranged in the card slot. An electrical interconnection between the optical module and the electronic integrated circuit chip is realized through wiring in the package substrate and the PCB.

In some embodiments, a card slot is arranged at an edge of the PCB, and the optical module is pluggably arranged in the card slot. An electrical interconnection between the optical module and the electronic integrated circuit chip is realized through wiring in the package substrate and an overhead cable above the PCB.

In some embodiments, the optical module is arranged in a first area of the PCB; the package substrate is arranged in a second area of the PCB different from the first area. An electrical interconnection between the optical module and the electronic integrated circuit chip is realized through wiring in the package substrate and the PCB.

In some embodiments, the electronic integrated circuit chip is arranged in a first area of the package substrate; the optical module is arranged in a second area of the package substrate different from the first area; the package substrate is arranged on the PCB. An electrical interconnection between the optical module and the electronic integrated circuit chip is realized through wiring in the package substrate.

In some embodiments, the electronic integrated circuit chip inputs an input electrical signal to the electrical input/output interface of the optical module through the PCIe physical interface, and the optical module converts the received input electrical signal into an output optical signal. The optical module converts the input optical signal received from the optical input/output interface into the output electrical signal, and provides the output electrical signal to the electronic integrated circuit chip.

In another aspect, the present disclosure provides an optical switching system. The optical switching system comprises: one or more optical switches; a plurality of electronic integrated circuit chips, each of the plurality of electronic integrated circuit chips having a PCIe physical interface; and a plurality of optical modules as described above. The PCIe physical interface of each electronic integrated circuit chip of the plurality of electronic integrated circuit chips is directly electrically connected with the electrical input/output interface of a corresponding optical module, and the corresponding optical module is connected to the optical switches through an optical fiber.

In another aspect, the present disclosure provides an optical switching system. The optical switching system comprises: a plurality of servers; and a plurality of optical switches. Each server of the plurality of servers comprises at least one optical module as described above, and each server is optically interconnected with each optical switch through a corresponding optical module.

In yet another aspect, the present disclosure provides an optical switching system. The optical switching system comprises: a plurality of servers; and at least one optical switch. Each server of the plurality of servers comprises at least one optical module as described above, and each server is optically interconnected with at least a part of optical switches in the at least one optical switch through a corresponding optical module. In addition, a part of the plurality of servers are optically interconnected in a point-to-point manner through corresponding optical modules.

### BRIEF DESCRIPTION OF DRAWINGS

Fig. 1 is a schematic diagram showing a traditional optical interconnection structure based on PCIe and Ethernet protocol conversion.
Fig. 2 is a schematic diagram showing the overall configuration of an optical module according to an embodiment of the present disclosure.
Figs. 3A-3B are structural diagrams showing examples of an optical module according to an embodiment of the present disclosure.
Fig. 4 is a structural diagram showing another example of an optical module according to an embodiment of the present disclosure.
Figs. 5A-5D are side views showing examples of a photonic-electronic integrated semiconductor structure according to an embodiment of the present disclosure.
Fig. 6 is a schematic diagram showing an example of an optical switching system according to an embodiment of the present disclosure.
Fig. 7 is a schematic diagram showing another example of an optical switching system according to an embodiment of the present disclosure.
Fig. 8 is a schematic diagram showing yet another example of an optical switching system according to an embodiment of the present disclosure.

### DETAILED DESCRIPTION

Embodiments of the present disclosure will be described in more detail below with reference to the accompanying drawings. Although some embodiments of the present disclosure are shown in the accompanying drawings, it should be understood that the present disclosure should not be construed as being limited to the embodiments set forth herein; on the contrary, these embodiments are provided for a more thorough and complete understanding of the present disclosure. It should be understood that the drawings and embodiments of the present disclosure are only for illustrative purposes and are not intended to limit the protection scope of the present disclosure.

It should be noted that the various components or assemblies described in the various embodiments of the present disclosure are merely schematic. In some cases, some of these components or assemblies may be omitted, or some of these components or assemblies may be replaced with other components or assemblies having the same or similar functions, and additional components or assemblies may also be added.

In addition, the various components or assemblies described separately or in combination in the various embodiments of the present disclosure are merely for the convenience of description, which does not mean that they are actually physically separated or combined, nor does it mean that such separation or combination is necessary. A person having ordinary skill in the art may split or combine the various components or assemblies arbitrarily according to actual needs.

Any of the above modifications or combinations falls within the protection scope of the present disclosure without departing from the inventive concept of the present disclosure.

Peripheral Component Interconnect Express (PCIe) is a high-speed serial computer expansion bus standard, originally named "3GIO" and proposed by Intel in 2001. PCIe is a full-duplex bus that uses high-speed serial transmission and can support higher frequencies. In addition, PCIe belongs to high-speed serial point-to-point high-bandwidth transmission, and the connected devices are allocated exclusive channel bandwidth, no longer sharing the bus bandwidth like the PCI bus.

PCIe has a variety of specifications, including PCIe x1, PCIe x4, PCIe x8, PCIe x16, PCIe x32, where the number after x indicates the number of channels in the PCIe slot. PCIe slots are backward compatible, for example, a PCIe x16 slot can be inserted with x8, x4, x1 cards, and the final operating mode is determined by the PCIe card. For example, if a PCIe x4 card is inserted into a PCIe x16 slot, it will eventually operate in the PCIe x4 mode.

PCIe has released multiple versions so far, including PCIe 1.0, PCIe 2.0, PCIe 3.0, PCIe 4.0, PCIe 5.0, PCIe 6.0, and various versions are backward compatible, and any version of PCIe card and motherboard can work in the mode of the lowest version. For example, if a PCIe 3.0 card is inserted into a PCIe 2.0 slot, it will eventually operate in the PCIe 2.0 version.

Embodiments of the present disclosure provide an optical module that can be directly driven by an input PCIe electrical signal and can directly output a PCIe electrical signal.

In some embodiments, the above-mentioned input PCIe electrical signal may be a PCIe electrical signal output from a standard PCIe physical interface, and the above-mentioned output PCIe electrical signal can be directly fed to a standard PCIe physical interface and can be subjected to reverse protocol conversion by the standard PCIe physical interface.

For the sake of simplicity, hereinafter, such an optical module that is directly driven by a PCIe electrical signal and can directly output a PCIe electrical signal is referred to as a PCIe optical module.

It should be noted that in this document, the term "PCIe electrical signal" refers to an electrical signal conforming to the PCIe bus standard. For example, a PCIe electrical signal may be an electrical signal obtained by protocol conversion through a physical layer of a PCIe interface on an external electronic integrated circuit chip. In addition, for example, a "PCIe electrical signal" may include a high-speed differential electrical signal and a sideband low-speed electrical signal directly output from a PCIe physical interface of an external electronic integrated circuit chip.

Depending on the data transmission rate and modulation mode adopted by the system, the "PCIe electrical signal" may include, for example, a 32G high-speed differential electrical signal in the NRZ format, or a 64G high-speed differential electrical signal in the PAM4 format, for example.

Various embodiments of the PCIe optical module will be described below with reference to the accompanying drawings.

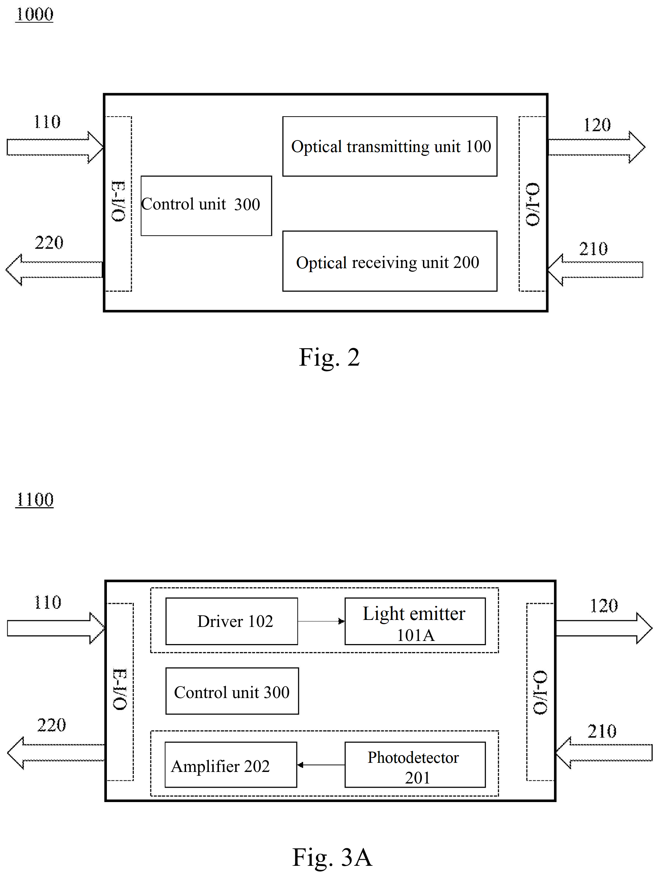

Fig. 2 is a schematic diagram showing the overall configuration of an optical module 1000 according to an embodiment of the present disclosure.

As shown in Fig. 2, the optical module 1000 functionally includes an electrical input/output interface E-I/O, an optical input/output interface O-I/O, an optical transmitting unit 100, an optical receiving unit 200, and a control unit 300.

The optical transmitting unit 100, also referred to as a TX unit, is configured to convert an input electrical signal 110 received from the electrical input/output interface E-I/O into an output optical signal 120, i.e., perform electrical-to-optical conversion (also referred to as E-O conversion).

The optical receiving unit 200, also referred to as an RX unit, is configured to convert an input optical signal 210 received from the optical input/output interface O-I/O into an output electrical signal 220, i.e., perform optical-to-electrical conversion (also referred to as O-E conversion).

The control unit 300 may be any form of controller or microcontroller, configured to control the optical transmitting unit 100 to perform E-O conversion of the input electrical signal 110 into the output optical signal 120. Similarly, the control unit 300 may also control the optical receiving unit 200 to perform O-E conversion of the input optical signal 210 into the output electrical signal 220.

As mentioned above, the optical module proposed by the present disclosure can be directly driven by a PCIe electrical signal and can directly output a PCIe electrical signal, mainly by configuring the above-mentioned electrical input/output interface to be directly connected to a PCIe interface in an output port of a functional electronic integrated circuit chip, and directly transmitting the received signal to a driver in the optical transmitting unit 100 of the optical module. That is, the signal received by the optical module from the PCIe interface in the output port of the functional electronic integrated circuit chip is directly transmitted to the driver of the optical module without protocol conversion and other processing.

That is, the input electrical signal 110 and the output electrical signal 220 shown in Fig. 1 are both PCIe electrical signals.

In this way, compared with an Ethernet optical module, the PCIe optical module proposed by the present disclosure does not need to be provided with a retimer, and does not need to be provided with an analog-to-digital converter (ADC) or a digital-to-analog converter (DAC) to perform analog-to-digital or digital-to-analog conversion on a high-speed electrical signal, making the PCIe optical module completely transparent to digital logic protocols and reducing system delay.

In some embodiments, in the E-O conversion direction, the input electrical signal 110 may be an electrical signal from an external device, for example, an electrical signal from any one of an external computing device, a storage device, a communication device and the like. In addition, the electrical signal 220 output from the optical module 1000 may be provided to the same external device.

For example, the external device may be a device with a PCIe physical interface and capable of receiving or sending PCIe electrical signals. In this case, the above-mentioned input electrical signal can be input into the electrical input/output interface E-I/O of the optical module 1000 through the PCIe physical interface of the external device, so as to perform E-O conversion.

In this case, for example, if the electrical signal output by the PCIe physical interface of the external device is a PCIe electrical signal carrying "information A", when the optical module 1000 receives the PCIe electrical signal carrying "information A", the optical transmitting unit 100 in the optical module 1000 will convert the PCIe electrical signal into a corresponding optical signal under the control of the control unit 300, and the optical signal will also carry the same "information A". Such carrying of information is realized through a light modulation operation in the optical transmitting unit 100. The specific implementation manner of light modulation will be described in detail later.

Therefore, converting the received input electrical signal 110 into the output optical signal 120 as described above actually means loading the information carried on the input electrical signal 110 onto the output optical signal 120 in a modulation manner.

Correspondingly, in the O-E conversion direction, the input optical signal 210 may also be an optical signal from an external device. In addition, the optical signal 120 output from the optical module 1000 may also be provided to the same external device.

The external device may provide the input optical signal 210 to the optical module 1000 through an optical fiber, for example, and the input optical signal 210 may carry specific information (e.g., "information B"). That is, the input optical signal 210 may carry "information B" through a certain modulation technology. The optical receiving unit 200 in the optical module 1000 performs O-E conversion on such an optical signal carrying "information B", so as to obtain an electrical signal carrying the same "information B". Such an output electrical signal can then be provided to an external computing device, storage device, communication device and the like as described above.

The above-mentioned PCIe interface (e.g., a PCIe interface in an output port of an electronic integrated circuit chip) may include PCIe interfaces conforming to various versions, including but not limited to PCIe interfaces conforming to any one of the above-mentioned PCIe 1.0, PCIe 2.0, PCIe 3.0, PCIe 4.0, PCIe 5.0, and PCIe 6.0 versions. Similarly, under the corresponding version, the PCIe interface of the optical module 1000 as described above may also be any one of various specifications, including but not limited to PCIe x1, PCIe x4, PCIe x8, PCIe x16, and PCIe x32.

Therefore, the above-mentioned PCIe electrical signal may be any one of electrical signals conforming to the above various PCIe versions and various specifications.

By providing the above-mentioned PCIe optical module that is directly driven by a PCIe electrical signal and can directly output a PCIe electrical signal, computing devices can be interconnected more simply through such a PCIe optical module when building an optical network, thereby avoiding physical layer and protocol layer conversion from PCIe to Ethernet.

In addition, since the PCIe optical module proposed by the present disclosure directly receives a PCIe electrical signal and directly outputs a PCIe electrical signal, the operations of digital-to-analog conversion and analog-to-digital conversion further performed inside the optical module before and after conversion are omitted. That is, the PCIe optical module proposed by the present disclosure may not include traditional DAC components and ADC components, so that optical-to-electrical and electrical-to-optical conversions can be performed more quickly, which helps to further reduce the delay of data transmission.

Therefore, the PCIe optical module proposed by the present disclosure can not only solve the problems of bandwidth limitation and high delay in the Ethernet solution, but also simplify the hardware design.

Optionally, an electrical signal based on the CXL protocol may also be used in the above-mentioned PCIe optical module to further reduce data transmission delay.

The Compute Express Link (CXL) protocol is an emerging technical specification developed by the open industry standards organization of the CXL Consortium, which can support data center acceleration. Since CXL is based on the PCIe protocol (PCIe 5.0) and is fully compatible with standard PCIe slots, it can enable the memory or cache of devices to be quickly accessed globally by all devices supporting the CXL protocol. Therefore, the CXL protocol can be used to complete fast access of devices through a standard PCIe interface, thereby bringing higher data access efficiency and lower local data access latency. In this document, an electrical signal based on the physical layer of a standard PCIe interface (e.g., PCIe 5.0) and using the CXL protocol is also referred to as a PCIe/CXL electrical signal.

In some embodiments, the above-mentioned input electrical signal and output electrical signal may be PCIe/CXL electrical signals based on the physical layer of a PCIe interface and a CXL protocol layer. Transmitting an electrical signal based on the CXL protocol in a standard PCIe interface is conducive to realizing further acceleration of data access and data exchange.

The various embodiments in which the optical module in the present disclosure directly supports PCIe electrical signals have been described above. Some examples of the internal configuration of the PCIe optical module proposed by the present disclosure will be described below with reference to Figs. 3A to 3B.

Fig. 3A is a structural diagram showing an example of an optical module 1100 according to an embodiment of the present disclosure. It should be noted that the optical module 1100 shown in Fig. 3A can be regarded as a more detailed embodiment of the optical module 1000 shown in Fig. 2.

For example, the optical transmitting unit 100 as shown in Fig. 1 may include a light emitter 101A and a driver 102 as shown in Fig. 3A. The driver 102 is configured to drive the light emitter 101A to emit an optical signal as the output optical signal 120.

In addition, the optical receiving unit 200 as shown in Fig. 1 may include a photodetector 201 and an amplifier 202 as shown in Fig. 3A. The photodetector 201 can convert the detected input optical signal 210 into an electrical signal, and the amplifier 202 can then amplify the converted electrical signal, and then output the amplified electrical signal as the output electrical signal 220.

The light emitter 101A shown in Fig. 3A may be a "directly modulated" light emitter, for example, a directly modulated Vertical-Cavity Surface-Emitting Laser (VCSEL) or a Distributed Feedback (DFB) laser.

The so-called "direct modulation" means that the control unit 300 can control the electrical signal provided by the driver 102 to the light emitter 101A according to the input electrical signal 110, so as to control the intensity of the optical signal emitted by the light emitter 101A, without using other modulators to load or modulate the information in the electrical signal onto the emitted optical signal.

For example, the control unit 300 can directly control the magnitude of the current provided by the driver 102 according to the amplitude of the logic levels "1" and "0" of the input electrical signal 110, so that the intensity of the light emitted by the light emitter 101A can have a linear or substantially linear relationship with the amplitude of the input current.

Optionally, the light emitter in the optical module of the present disclosure may also be an "externally modulated" light emitter. As the name implies, an "externally modulated" light emitter means that the light emitter itself cannot modulate light and needs to rely on an external device to modulate light.

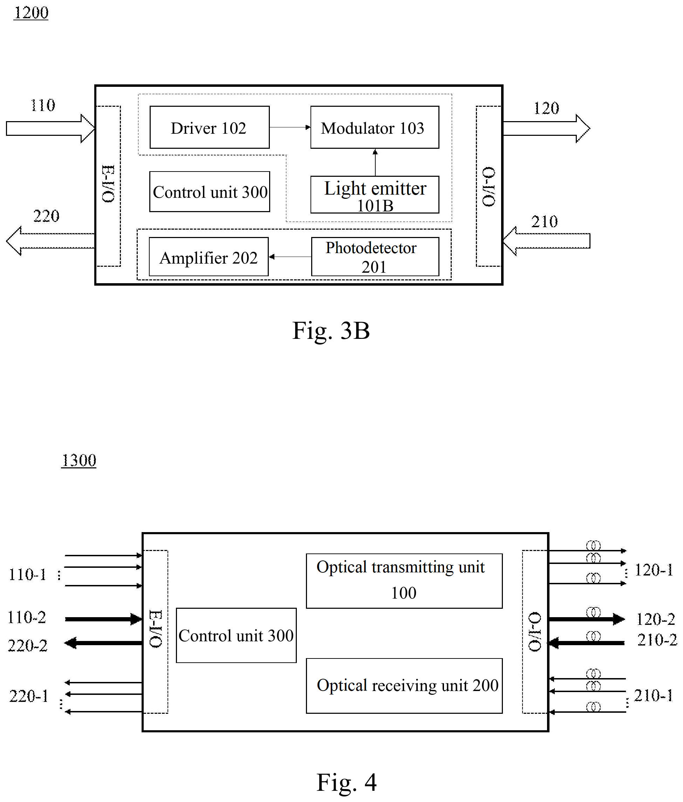

Fig. 3B is a structural diagram showing another example of an optical module 1200 according to an embodiment of the present disclosure. In Fig. 3B, the light emitter 101B is, for example, an externally modulated laser, and the optical transmitting unit 100 as shown in Fig. 1 needs to additionally include a modulator 103 besides the driver 102 and the light emitter 101B.

In this case, the light emitter 101B is in a stable light-emitting state and emits light with a consistent intensity. The light emitted by the light emitter 101B is provided to the modulator 103, and the control unit 300 can control the electrical signal input to the modulator 103 through the driver 102, so as to modulate the amplitude, phase and other characteristics of the light received from the light emitter 101B, so as to modulate the information carried in the input electrical signal 110 onto the light to form the output optical signal 120.

Typical examples of the modulator 103 include integrated photonic modulators such as silicon-based, indium phosphide, thin-film lithium niobate or polymer modulators, and may be micro-ring modulators, Mach-Zehnder modulators or electro-absorption modulators in structure.

For example, in the case where the modulator 103 is an electro-absorption modulator, the control unit 300 can control the on/off of the modulator 103 through the driver 102 to make it absorb or not absorb light, so as to absorb the light emitted by the light emitter 101B (e.g., corresponding to the output logic "0"), or not absorb the light emitted by the light emitter 101B (e.g., corresponding to the output logic "1"). Through this method, the intensity, phase and the like of the final output light can be controlled, so that information can be modulated or loaded onto the output optical signal 120.

It should be noted that the modulation formats of the logic levels "1" and "0" of the input electrical signal 110 mentioned above are merely exemplary and not limiting. In practice, the input electrical signal 110 may have any suitable modulation format.

In addition, the driver 102, the photodetector 201 and the amplifier 202 shown in Figs. 3A-3B can be realized by any suitable components in the art.

For example, the driver 102 can be realized by a circuit composed of various electronic components such as transistors, resistors and capacitors. For example, the photodetector 201 can be various types of photodiodes with various sensitivities, such as a photomultiplier tube (PMT), an avalanche photodiode (APD), a silicon photomultiplier (SiPM) and the like. **In** addition, the amplifier 202 may be a traditional transimpedance amplifier (TIA), or various types of amplifiers based on similar principles or other principles, which will not be elaborated here.

The various embodiments of the internal structure of the PCIe optical module have been mainly described above with reference to Figs. 3A-3B, and the input and output signals of the PCIe optical module will be described in detail below.

**In** the field of optical transmission, signals transmitted in a system are roughly divided into two categories according to functions, one is data signals, and the other is control signals.

A data signal refers to a signal carrying target information data to be transmitted, which may be an electrical signal or an optical signal. For example, a data electrical signal can represent data information through the amplitude and timing of its level, while a data optical signal can represent data information through the intensity, phase, frequency and other characteristics of modulated light. Since a data signal contains a huge amount of information and changes rapidly, it generally needs to be transmitted by using a high-speed differential signal.

A control signal generally refers to a signal carrying control information or system information, and may also be any one of an electrical signal or an optical signal. Compared with a data signal, a control signal carries a small amount of information and changes at a low speed in the time domain, and a low-speed sideband signal can be used to transmit the control signal.

The input and output signals discussed above with respect to Figs. 2 to 3B in the present disclosure include data signals, i.e., signals carrying target information data to be transmitted. Fig. 4 is a schematic diagram showing various signals in an optical module 1300 according to an embodiment of the present disclosure.

**For** example, as shown in Fig. 4, the input electrical signal input into the optical module 1300 may include a first data electrical signal 110-1, and the first data electrical signal 110-1 may be an electrical signal with multiple channels.

In this case, the optical transmitting unit 100 needs to include a corresponding plurality of transmitting channels configured to convert the first data electrical signal 110-1 into a first data optical signal 120-1, where the first data optical signal 120-1 also has a corresponding plurality of channels.

For example, in the case where the first data electrical signal 110-1 has 8 channels, the optical transmitting unit 100 also needs to include 8 transmitting channels to support E-O conversion of the electrical signal in each channel of the first data electrical signal 110-1. And after E-O conversion, the first data optical signal 120-1 also has an optical output of 8 channels.

For example, in the case where the first data electrical signal 110-1 has 32 channels, the optical transmitting unit 100 also needs to include 32 transmitting channels to support E-O conversion of the electrical signal in each channel of the first data electrical signal 110-1. And after E-O conversion, the first data optical signal 120-1 also has an optical output of 32 channels.

It should be noted that the optical transmitting unit 100 including a plurality of transmitting channels means that a corresponding driver + light emitter needs to be arranged for the electrical signal in each channel of the first data electrical signal 110-1 to perform E-O conversion on the electrical signal of the channel.

For example, in the case where the first data electrical signal 110-1 has 8 channels, 8 groups of drivers + light emitters are needed to drive 8 electrical signals. In the case where the first data electrical signal 110-1 has 16 channels, 16 groups of drivers + light emitters are needed to drive 16 electrical signals, and so on.

In some examples, the light emitter in each group of driver + light emitter may be any one of the above-mentioned directly modulated light emitters and externally modulated light emitters. In addition, in the case where the light emitter in each group of driver + light emitter is an externally modulated light emitter, each transmitting channel also needs to additionally include a corresponding modulator, for example, the modulator may be one of the various modulators described above with respect to Fig. 3B.

**Preferably,** in the case where the first data electrical signal 110-1 has multiple channels, the multiple transmitting channels in the optical transmitting unit 100 may be configured with the same driver + light emitter group, or driver + light emitter + modulator group, thereby simplifying the design and control of the PCIe optical module.

For example, in the case where the first data electrical signal 110-1 has 8 channels, each of the 8 transmitting channels in the optical transmitting unit 100 may have the same configuration. For example, each transmitting channel may include a combination of the same driver and the same directly modulated light emitter, or each transmitting channel may include a combination of the same driver, the same externally modulated light emitter and the same modulator.

However, any other arrangement also falls within the scope of the present disclosure. For example, in the case where the first data electrical signal 110-1 has 8 channels, channel 1 may be configured with a combination of a driver + a VCSEL directly modulated laser, channel 2 may be configured with a combination of a driver + a DFB directly modulated laser, and channels 3 to 8 may be configured with a combination of a driver + an externally modulated laser + an electro-absorption modulator.

The same applies to the optical receiving direction. For example, as shown in Fig. 4, the input optical signal input into the optical module 1300 may include a second data optical signal 210-1, the second data optical signal 210-1 may be an optical signal with multiple channels, and the optical receiving unit 200 also includes a corresponding plurality of receiving channels configured to convert the second data optical signal 210-1 into a second data electrical signal 220-1 with multiple channels.

For example, in the case where the second data optical signal 210-1 has 8 channels, the optical receiving unit 200 also needs to include 8 receiving channels to support O-E conversion of the optical signal in each channel of the second data optical signal 210-1. After O-E conversion, the second data electrical signal 220-1 also has an electrical output of 8 channels.

For example, in the case where the second data optical signal 210-1 has 32 channels, the optical receiving unit 200 also needs to include 32 receiving channels to support O-E conversion of the optical signal in each channel of the second data optical signal 210-1. After O-E conversion, the second data electrical signal 220-1 also has an electrical output of 32 channels.

It should be noted that the optical receiving unit 200 including a plurality of receiving channels means that a corresponding photodetector + amplifier needs to be arranged for the optical signal in each channel of the second data optical signal 210-1 to perform O-E conversion on the electrical signal of the channel.

For example, in the case where the second data optical signal 210-1 has 8 channels, 8 groups of photodetectors + amplifiers are needed to receive 8 optical signals. In the case where the second data optical signal 210-1 has 16 channels, 16 groups of photodetectors + amplifiers are needed to receive 16 optical signals, and so on.

In some examples, the optical receiver and the amplifier in each group of photodetector + amplifier may be any one of the above-mentioned photodiodes and transimpedance amplifiers.

Preferably, in the case where the second data optical signal 210-1 has multiple channels, the multiple receiving channels in the optical receiving unit 200 may be configured with the same photodetector + amplifier group.

For example, in the case where the second data optical signal 210-1 has 8 channels, each of the 8 receiving channels in the optical receiving unit 200 may have the same configuration. For example, each receiving channel may include a combination of the same photodiode and the same transimpedance amplifier.

However, different arrangements for each receiving channel also fall within the scope of the present disclosure.

The example in which the input and output of the PCIe optical module include multiple channels is shown above with reference to Fig. 4. It should be understood that in practical applications, the input and output of the PCIe optical module may also include a single channel.

In addition, the number of channels of the data signal in the E-O direction may be equal to the number of channels of the data signal in the O-E direction. Optionally, the number of channels of the data signal in the E-O direction may also be not equal to the number of channels of the data signal in the O-E direction.

In addition, it should be noted that ordinal numbers such as "first" and "second" mentioned above in the present disclosure are merely used to distinguish some terms or components, and are not intended to limit the primary and secondary relationship of these terms or components, nor to limit the time sequence of these terms or components when performing operations.

For example, in the above embodiments, "first" is used to distinguish various signals in the E-O conversion direction, and "second" is used to distinguish various signals in the O-E conversion direction.

For example, the above-mentioned first data electrical signal and first data optical signal represent an electrical signal and an optical signal in the E-O conversion direction, respectively, and the second data electrical signal and second data optical signal represent an electrical signal and an optical signal in the O-E conversion direction, respectively.

For the sake of clarity, the various embodiments described later will also follow this rule, i.e., using "first" to define various signals in the E-O conversion direction and "second" to define various signals in the O-E conversion direction.

Usually, the multiple channels of the above-mentioned first data electrical signal and second data electrical signal (110-1 and 220-1) correspond to different numbers of high-speed differential channels in different specifications of PCIe. For example, they may correspond to different numbers of differential channels in specifications such as the aforementioned PCIe x1, PCIe x4, PCIe x8, PCIe x16, PCIe x32 and the like.

For example, a 16-channel first data electrical signal 110-1 may represent an electrical signal of 16 x 32G NRZ format high-speed differential channels, or an electrical signal of 16 x 64G PAM4 format high-speed differential channels, for example.

The above-discussed first data electrical signal and second data electrical signal (110-1 and 220-1), and first data optical signal and second data optical signal (120-1 and 210-1) refer to data signals carrying target data information.

In some embodiments, in addition to the multi-channel data signal, the input and output signals of the optical module may also include an additional control signal, for example, the control signal shown by the black bold arrow in Fig. 4.

As shown in Fig. 4, for example, the input electrical signal of the optical module 1300 may further include a first control electrical signal 110-2 input to the E-I/O.

For example, the first control electrical signal 110-2 may carry first control information, and the optical transmitting unit 100 may convert the first control electrical signal 110-2 into a first control optical signal 120-2 carrying the first control information.

In addition, similarly, the input optical signal of the optical module 1300 may further include a second control optical signal 210-2.

For example, the second control optical signal 210-2 may carry second control information, and the optical receiving unit 200 may convert the second control optical signal 210-2 into a second control electrical signal 220-2 carrying the second control information.

Similar to the principles described above with respect to the first data electrical signal and the second data electrical signal (110-1 and 220-1), and the first data optical signal and the second data optical signal (120-1 and 210-1), for the first control electrical signal 110-2, a dedicated combination of a driver + a light emitter needs to be set in the optical transmitting unit 100 for performing E-O conversion of the first control electrical signal 110-2, so as to output the first control optical signal 120-2.

Similarly, for the second control optical signal 210-2, a dedicated combination of a photodetector + an amplifier needs to be set in the optical receiving unit 200 for performing O-E conversion of the second control optical signal 210-2, so as to output the second control electrical signal 220-2.

In addition, the descriptions of the optical transmitting unit 100, the optical receiving unit 200 and the control unit 300 in Fig. 4 are similar to those in Fig. 2. And the emitting unit 100 and the optical receiving unit 200 in Fig. 4 may have any configuration as described above with respect to Figs. 3A-3B, which will not be repeated here.

It should be noted that although the first control electrical signal 110-2, the first control optical signal 120-2, the second control optical signal 210-2 and the second control electrical signal 220-2 are described as a single channel above, this is merely for simplifying the description. In other embodiments, the above control signals may also have multiple channels, for example, 2, 3 or more, so as to realize E-O/O-E conversion of more control signals.

In the case where the above control signals have multiple channels, a dedicated transmitting channel or receiving channel also needs to be arranged for each channel, and the configuration of the transmitting channel or receiving channel discussed above with respect to the data signal is also applicable to the control signal, which will not be repeated here.

In some embodiments, the above control signals may be PCIe sideband low-speed control signals.

For example, the first control electrical signal 110-2 may be a PCIe sideband low-speed control electrical signal, and the first control optical signal 120-2 subjected to E-O conversion may be a corresponding sideband low-speed control optical signal. The second control optical signal 210-2 may also be a sideband low-speed control optical signal, and the second control electrical signal 220-2 output after O-E conversion may also be a PCIe sideband low-speed control electrical signal.

The various embodiments of the PCIe optical module have been described above. As mentioned above, by providing the above-mentioned PCIe optical module that is directly driven by a PCIe electrical signal and can directly output a PCIe electrical signal, computing devices can be interconnected more simply through such a PCIe optical module when building an optical network, thereby avoiding physical layer and protocol layer conversion from PCIe to Ethernet. Optionally, the CXL protocol may also be used in the above-mentioned PCIe optical module to reduce data transmission delay.

In addition, since the PCIe optical module proposed by the present disclosure directly receives a PCIe electrical signal and directly outputs a PCIe electrical signal, the operations of digital-to-analog conversion and analog-to-digital conversion further performed inside the optical module before and after conversion are omitted, so that optical-to-electrical and electrical-to-optical conversions can be performed more quickly, which helps to further reduce the delay of data transmission.

Examples of typical photonic-electronic integrated semiconductor structures for realizing interconnection between computing devices by using any of the above-mentioned PCIe optical modules in the optical network design process will be described below with reference to the accompanying drawings.

A typical photonic-electronic integrated semiconductor structure generally includes any of the above-mentioned optical modules, an electronic integrated circuit chip, a package substrate and a PCB. The package substrate is at least used for packaging the electronic integrated circuit chip, and the PCB is used for arranging the package substrate. The electronic integrated circuit chip is configured with a PCIe physical interface, and the PCIe physical interface of the electronic integrated circuit chip is electrically interconnected with the electrical input/output interface of the optical module. In addition, the PCB is also used for mounting the optical module.

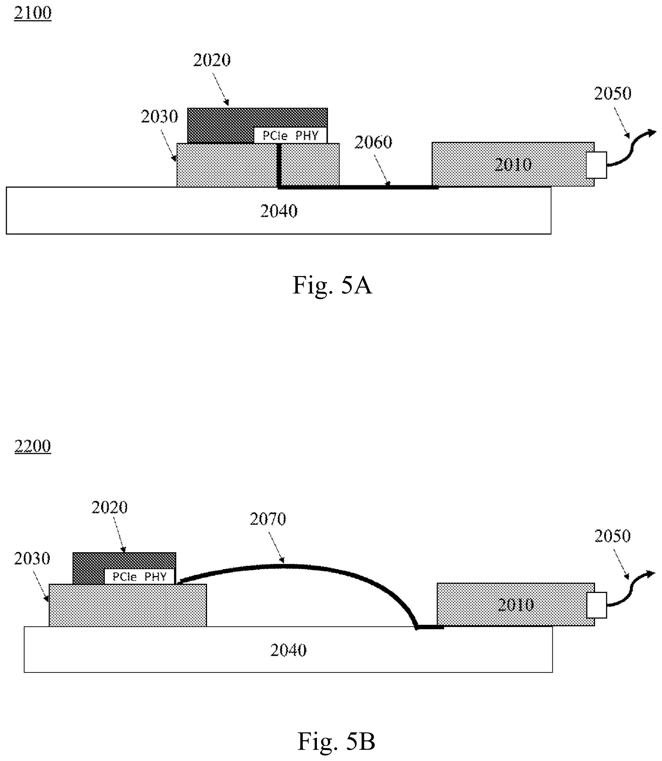

Figs. 5A-5D further show side views of examples of various photonic-electronic integrated semiconductor structures according to embodiments of the present disclosure, which focus on examples of various different implementation manners of electrical interconnection between an electronic integrated circuit chip and a PCIe optical module.

In the present disclosure, an electronic integrated circuit chip is configured to have a PCIe physical interface, also referred to as a PCIe PHY interface. The PCIe PHY interface is used to perform protocol conversion on the input/output I/O signals of the electronic integrated circuit chip, so as to make them conform to the PCIe standard.

For example, the electronic integrated circuit chip 2020 shown in Figs. 5A-5D is provided with a PCIe PHY interface, so that the electronic integrated circuit chip 2020 can be interconnected with the PCIe optical module 2010 through the PCIe PHY interface.

It should be noted that in the embodiments shown in Figs. 5A-5D, the PCIe PHY interface on the electronic integrated circuit chip 2020 can convert the digital signal inside the chip into a PCIe electrical signal. The PCIe electrical signal can be directly fed to the electrical input interface of the PCIe optical module 2010, so as to perform E-O conversion.

In addition, the PCIe electrical signal output from the electrical output interface after O-E conversion by the PCIe optical module 2010 can also be directly fed to the PCIe PHY interface on the electronic integrated circuit chip 2020, and the PCIe PHY interface further converts it into a digital signal for use by the electronic integrated circuit chip 2020.

Figs. 5A-5B show two embodiments in which a PCIe optical module is pluggably arranged at the edge of a PCB 2040.

For example, in the electrical package structure 2100 as shown in Fig. 5A, a card slot (not shown) may be arranged at an edge of the PCB 2040, and the optical module 2010 is pluggably arranged in the card slot.

The electronic integrated circuit chip 2020 is arranged on a package substrate 2030, and the package substrate 2030 is arranged on the PCB 2040.

In Fig. 5A, the electrical interconnection between the electronic integrated circuit chip 2020 and the optical module 2010 is realized through wiring 2060 in the package substrate 2030 and the PCB 2040.

For example, the edge of the PCB 2040 in Fig. 5A may correspond to the front panel of a server device. In this case, the plugging and unplugging operation of the optical module 2010 can be easily performed on the front panel of the server, so that the impact on other components when operating the optical module can be avoided.

In addition, in the case of the package as shown in Fig. 5A, the electronic integrated circuit chip 2020 can be arranged as close to the optical module 2010 as possible, thereby reducing the length of the wiring 2060 between the electronic integrated circuit chip 2020 and the optical module 2010, which is conducive to improving signal integrity.

In addition, corresponding wiring 2060 can be arranged for various data signals and control signals described above for the optical module, so that the optical module 2010 can perform E-O conversion on various electrical signals from the electronic integrated circuit chip 2020, and then the converted various optical signals are transmitted by the optical fiber array 2050 as shown in the figure.

Fig. 5B shows another embodiment of a package in which an optical module is pluggably arranged at the edge of a PCB 2040.

In the electrical package structure 2200 as shown in Fig. 5B, a similar card slot (not shown) may be arranged at an edge of the PCB 2040, and the optical module 2010 is pluggably arranged in the card slot.

The electronic integrated circuit chip 2020 is arranged on a package substrate 2030, and the package substrate 2030 is arranged on the PCB 2040.

Different from Fig. 5A, in Fig. 5B, the electrical interconnection between the electronic integrated circuit chip 2020 and the optical module 2010 is realized through the wiring in the package substrate 2030 and the overhead cable 2070 above the PCB 2040, and the electronic integrated circuit chip 2020 can be arranged at any suitable position on the PCB 2040.

Generally speaking, compared with the wiring in the PCB 2040, the overhead cable has relatively lower loss and noise. Therefore, for a pluggable optical module, the use of the overhead cable is relatively easy to ensure that the optical transmission system has a good signal-to-noise ratio, so as to meet the signal-to-noise ratio requirement of PCIe.

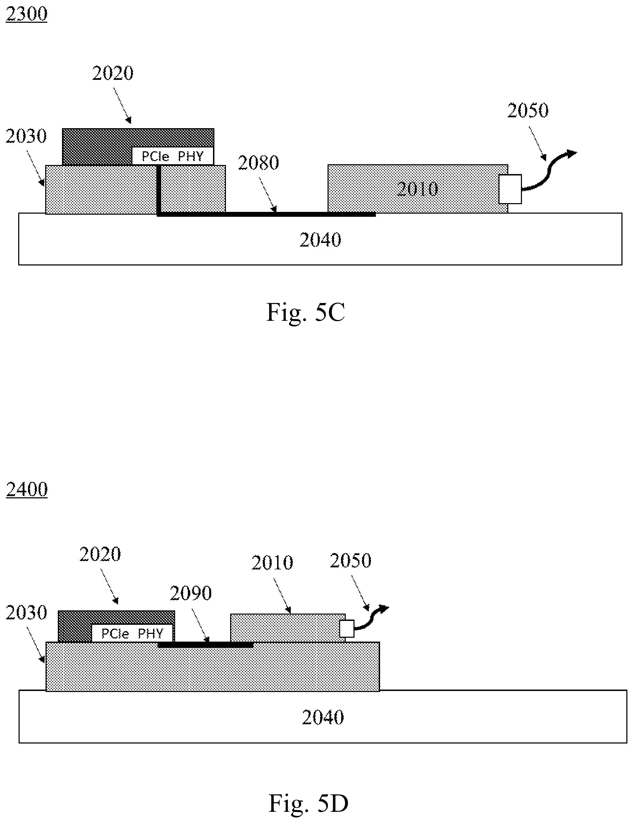

In addition to the examples of the pluggable optical module package shown in Figs. 5A-5B, Fig. 5C also shows a schematic diagram of another package of an on-board optical module.

In the electrical package structure 2300 as shown in Fig. 5C, the optical module 2010 is arranged in a first area of the PCB 2040, instead of being pluggably arranged in a card slot at the edge of the PCB 2040 as in Figs. 5A-5B. Meanwhile, the electronic integrated circuit chip 2020 is arranged on the package substrate 2030, and the package substrate 2030 is arranged in a second area of the PCB 2040 different from the first area, i.e., the package substrate 2030 and the optical module 2010 are not arranged in an overlapping manner.

As shown in Fig. 5C, similar to Fig. 5A, the electrical interconnection between the electronic integrated circuit chip 2020 and the optical module 2010 is realized through the wiring 2080 in the package substrate 2030 and the PCB 2040.

However, in this case, different from Fig. 5A, the electronic integrated circuit chip 2020 can be arranged as close to the optical module 2010 as possible, thereby further reducing the length of the wiring 2080 between the electronic integrated circuit chip 2020 and the optical module 2010, which is conducive to improving the signal integrity.

In the package structures described above with reference to Figs. 5A-5C, the electronic integrated circuit chip 2020 and the optical module 2010 are separate, i.e., they are not packaged in the same substrate. In some cases, a co-packaging structure of the electronic integrated circuit chip 2020 and the optical module 2010 may also be considered.

Fig. 5D shows an example of co-packaging of the electronic integrated circuit chip 2020 and the optical module 2010.

In the electrical package structure 2400 as shown in Fig. 5D, the electronic integrated circuit chip 2020 is arranged in a first area of the package substrate 2030, and the optical module 2010 is arranged in a second area of the same package substrate 2030 different from the first area. Then, the package substrate 2030 on which both the electronic integrated circuit chip 2020 and the optical module 2010 are arranged is arranged on the PCB 2040.

In this co-packaging structure, the electrical interconnection between the electronic integrated circuit chip 2020 and the optical module 2010 is realized through the wiring 2090 in the package substrate 2030.

Due to the co-packaging structure, the electronic integrated circuit chip 2020 and the optical module 2010 can be closer to each other, so that the wiring 2090 in the package substrate 2030 can be made as short as possible, thereby reducing insertion loss and noise. Therefore, it is relatively easy for the co-packaged optical module to ensure that the optical transmission system has a good signal-to-noise ratio, so as to meet the signal-to-noise ratio requirement of PCIe.

In any of the above photonic-electronic integrated semiconductor structures, in the E-O conversion direction, the electronic integrated circuit chip 2020 as shown in Figs. 5A-5D can input an input electrical signal into the optical module 2010 through its PCIe PHY interface, and the optical module 2010 can convert the received input electrical signal into an output optical signal. The output optical signal can be transmitted through an optical fiber array 2050, for example.

In the O-E conversion direction, the optical module 2010 can convert the received input optical signal into an output electrical signal, and provide the output electrical signal to the electronic integrated circuit chip 2020.

All the characteristics and functions of the PCIe optical module described above with reference to Figs. 2 to 4 are applicable to the various package structures in Figs. 5A-5D, which will not be repeated here.

The various photonic-electronic integrated semiconductor structures between the PCIe optical module and the electronic integrated circuit chip have been described above with reference to Figs. 5A-5D. A person having ordinary skill in the art may select different package structures according to actual needs in the process of designing a package or building an optical network, so as to achieve different purposes.

For example, for the purpose of convenient maintenance, the package structure of the pluggable optical module shown in Figs. 5A to 5B may be preferred. On the contrary, if the demand for signal-to-noise ratio and signal integrity is relatively high, the non-pluggable package structure shown in Fig. 5C or the co-packaging structure shown in Fig. 5D may be preferred.

The package structures of the present disclosure are not limited to the above embodiments, and a person having ordinary skill in the art can easily combine or split the above arrangement modes without departing from the design concept of the present disclosure, and the resulting modified package structures also fall within the protection scope of the present disclosure.

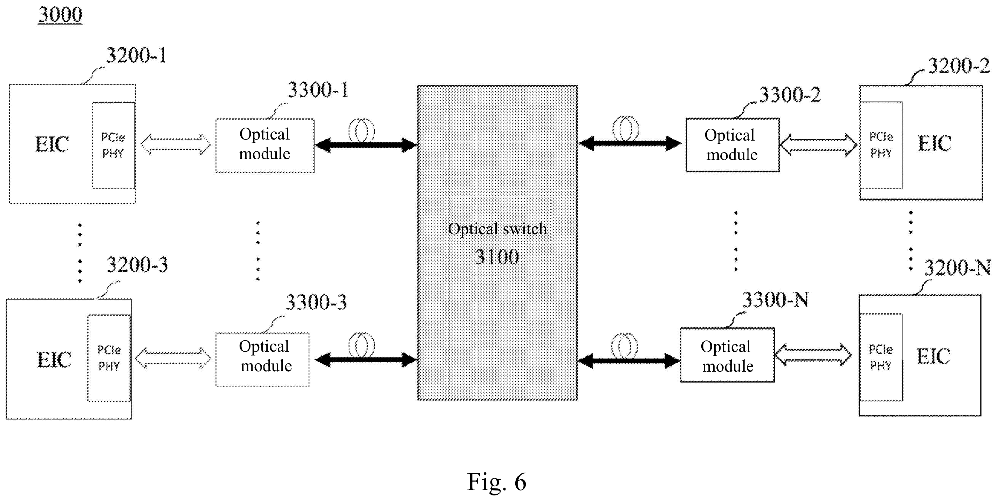

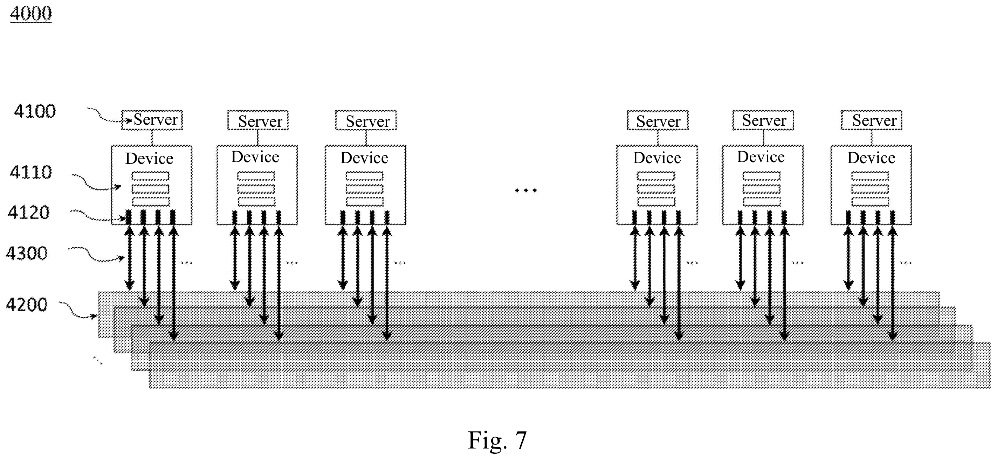

The present disclosure also provides, based on the PCIe optical module as described above, an optical switching system based on the PCIe optical module. Figs. 6-8 show schematic diagrams of various examples of the optical switching system according to the embodiments of the present disclosure. It should be noted that the optical switching system shown in Fig. 6 is actually equivalent to the functional topological structure of the optical switching system proposed by the present disclosure. The optical switching systems shown in Figs. 7-8 are two different specific implementation forms for realizing the functional topological structure shown in Fig. 6. Therefore, the various operations and functions described with reference to Fig. 6 are also applicable to the optical switching systems shown in Figs. 7 to 8.

In one example, as shown in Fig. 6, the optical switching system 3000 includes one or more optical switches 3100, a plurality of electronic integrated circuit chips (EICs) (3200-1, 3200-2, ..., 3200-N), and a plurality of optical modules (3300-1, 3300-2, ..., 3300-N).

Each of the plurality of optical modules (3300-1, 3300-2, ..., 3300-N) may be any of the PCIe optical modules described above with reference to Figs. 2 to 4. Each of the plurality of electronic integrated circuit chips (EICs) (3200-1, 3200-2, ..., 3200-N) has a PCIe PHY interface, and the PCIe PHY interface of each electronic integrated circuit chip (EIC) (3200-1, 3200-2, ..., 3200-N) is directly connected to the electrical input/output interface of the corresponding optical module (3300-1, 3300-2, ..., 3300-N).

In addition, each optical module (3300-1, 3300-2, ..., 3300-N) is connected to the optical switch 3100 through an optical fiber.

The optical switch 3100 can control the optical path based on different physical principles, including piezoelectric, micro-electro-mechanical, electrical-to-optical principles and the like. For example, the optical switch 3100 may be composed of a series of free-space optical components or a series of integrated optical components.

With such a configuration, a first electronic integrated circuit chip among the plurality of electronic integrated circuit chips can exchange data with a second electronic integrated circuit chip among the plurality of electronic integrated circuit chips through the optical switch 3100. For example, the electronic integrated circuit chip 3200-K (K=1, 2, ..., N) can send data in the form of a PCIe data signal to the optical module 3300-K through the PCIe PHY interface, the optical module 3300-K can perform E-O conversion on the PCIe data signal, and then transmit the obtained optical signal to the optical switch 3100 through an optical fiber; the optical switch 3100 can further transmit the optical signal to the optical module 3300-M (M=1, 2, ···, N, and M≠K), and the optical module 3300-M can perform O-E conversion on the optical signal, and then directly transmit the obtained PCIe data signal to the electronic integrated circuit chip 3200-M, for example, through the PCIe PHY interface of the electronic integrated circuit chip 3200-M. Through the above manner, all-optical data exchange between any two electronic integrated circuit chips can be realized, the connection relationship of the interconnection link is reconstructed through the optical switch, and no protocol conversion or electrical exchange is required in the link reconstruction process, which greatly reduces the delay and simplifies the connection of the lines.

In addition, for example, before transmitting the above PCIe data signal, the electronic integrated circuit chip 3200-K may first send a PCIe control signal to the optical module 3300-K through the PCIe PHY interface, for example, the PCIe control signal may include information such as a destination (e.g., the index of the electronic integrated circuit chip 3200-M) and a time point. Then the optical module 3300-K can perform E-O conversion on the PCIe control electrical signal, and then transmit the obtained optical control signal to the optical switch 3100 through an optical fiber. After learning the control information contained in the optical control signal, the optical switch 3100 can switch the optical path to the corresponding position, for example, reconstruct and connect the optical paths between the electronic integrated circuit chip 3200-K and the electronic integrated circuit chip 3200-M, so as to the data sent by the electronic integrated circuit chip 3200-K is sent to the electronic integrated circuit chip 3200-M at a specified time point.

Data exchange between different electronic integrated circuit chips can be realized through the above example manner. Since no protocol conversion and electrical exchange to Ethernet are performed, the PCIe signal on the electronic integrated circuit chip can reach other electronic integrated circuit chips with the lowest delay, thereby realizing high-speed and delay-free data exchange.

In another example, as shown in Fig. 7, a fully reconfigurable and fully interconnected optical switching system 4000 is provided. The optical switching system 4000 includes a plurality of servers 4100 and at least a plurality of optical switches 4200.

Each server 4100 includes at least one optical module 4120 described above with reference to Figs. 2 to 4. In addition, each server 4100 further includes a computing device 4110. As shown in the figure, each server 4100 is optically interconnected with each optical switch 4200 through a corresponding optical module 4120 (e.g., by using an optical fiber 4300).

The reason why it is called a fully reconfigurable and fully interconnected optical switching system is that all the servers 4100 shown in Fig. 7 can rearrange the bandwidth transmission path between every two of them through the optical path exchange in the corresponding optical switch 4200, thereby realizing fully reconfigurable and all-optical interconnection between every two servers 4100, and the computing device attached to the server performs electrical-to-optical/optical-to-electrical conversion through the corresponding optical module 4120, and then connects with the optical switch 4200 through an optical fiber/optical fiber array, with simple connection lines.

It should be noted that the above-mentioned optical interconnection can be realized by using, for example, an optical fiber or an optical fiber array.

The computing device 4110 attached to the server 4100 may include a graphics card, an AI acceleration card, a memory, a storage and the like, and the computing device 4110 is directly electrically connected to the PCIe optical module through its PCIe PHY interface, so as to realize direct electrical connection without physical layer and protocol layer conversion to Ethernet.

For example, the computing device 4110 may include the electronic integrated circuit chip (EIC) described with reference to Fig. 6, and the EIC is provided with a PCIe PHY interface. In this case, the computing device 4110 can be directly electrically connected to the PCIe optical module through the PCIe PHY interface of the EIC.

In addition, as mentioned above, the optical switch 4200 can control the optical path based on different physical principles, including piezoelectric, micro-electro-mechanical, electrical-to-optical principles and the like. For example, the optical switch 4200 may be composed of a series of free-space optical components or a series of integrated optical components.

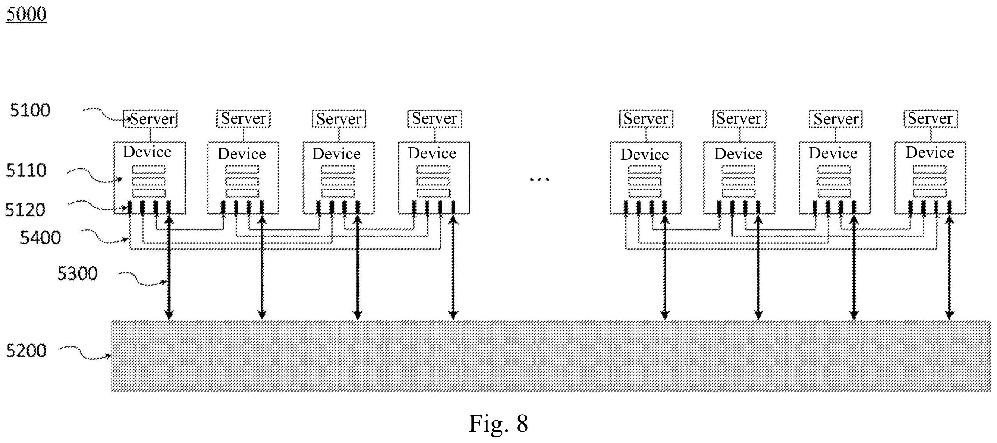

In yet another example, as shown in Fig. 8, a hybrid connection optical switching system 5000 with point-to-point and all-optical switching is provided. The optical switching system 5000 includes a plurality of servers 5100 and at least one optical switch 5200.

Each server 5100 includes at least one optical module 5120 described above with reference to Figs. 2 to 4. In addition, each server 5100 further includes a computing device 5110. As shown in the figure, each server 5100 is optically interconnected with at least a part of optical switches 5200 in the at least one optical switch 5200 through a corresponding optical module 5120 (e.g., by using an optical fiber 5300).

In addition, a part of the servers 5100 are also optically interconnected in a point-to-point manner through corresponding optical modules (e.g., by using an optical fiber 5400). Optionally, data exchange between adjacent servers can be realized through point-to-point optical interconnection, and data exchange between other servers can be realized through optical path reconstruction by an optical switch. This implementation manner can reduce the number of optical switches in a server cluster and save costs.

It is called a hybrid connection optical switching system with point-to-point and all-optical switching because, as shown in the figure, not only all servers are optically interconnected with some optical switches, but also part of the servers are optically interconnected in a point-to-point manner between every two of them. In such a hybrid structure, part of the bandwidth transmission path can be rearranged through the optical path exchange in the optical switch, so as to realize partially reconfigurable all-optical interconnection between every two of them.

It should be noted that the above-mentioned optical interconnection can be realized by using, for example, an optical fiber or an optical fiber array.

The computing device 5110 attached to the server 5100 may include a graphics card, an AI acceleration card, a memory, a storage and the like, and the computing device 5110 can be directly electrically connected to the PCIe optical module through its PCIe PHY interface, so as to realize direct electrical connection without physical layer and protocol layer conversion to Ethernet.

For example, the computing device 5110 may include the electronic integrated circuit chip EIC described with reference to Fig. 6, and the EIC is provided with a PCIe PHY interface. In this case, the computing device 5110 can be directly electrically connected to the PCIe optical module through the PCIe PHY interface of the EIC.

In addition, as mentioned above, the optical switch 5200 can control the optical path based on different physical principles, including piezoelectric, micro-electro-mechanical, electrical-to-optical principles and the like. For example, the optical switch 5200 may be composed of a series of free-space optical components or a series of integrated optical components.

The optical modules mentioned above with reference to Figs. 6 to 8 may be any of the PCIe optical modules described previously with reference to Figs. 2 to 4, and the package structure between the optical module mentioned above with reference to Figs. 6 to 8 and the electronic integrated circuit chip or the electronic integrated circuit chip of the computing device may be any of the photonic-electronic integrated semiconductor structures described with reference to Figs. 5A-5D, the details of which will not be repeated here.

In summary, in the various optical switching systems proposed by the present disclosure, the PCIe optical module proposed by the present disclosure can be used to realize all-optical data exchange between different chips or devices. Since the PCIe optical module is directly driven by a PCIe electrical signal and can directly output a PCIe electrical signal, a chip or device with a PCIe PHY interface can be directly electrically connected to such a PCIe optical module, thereby omitting the protocol conversion operation, digital-to-analog/analog-to-digital conversion operation and retiming operation and the corresponding components in the existing design, which is conducive to realizing faster data exchange, thus solving the problems of bandwidth limitation and high delay in the traditional Ethernet solution.

In addition, by using the corresponding photonic-electronic integrated semiconductor structure described with reference to Figs. 5A-5D in the optical switching system, the insertion loss and noise on the line can be further reduced, thereby ensuring the signal integrity, which is conducive to the implementation of the PCIe protocol or the CXL protocol.

In addition, by using the corresponding photonic-electronic integrated semiconductor structure described with reference to Figs. 5A-5D in the optical switching system, the optical module can also be arranged on the front panel of a server or other equipment in a pluggable form, thereby facilitating the maintenance of the system and the replacement of components.

In the above description, the embodiments of the present disclosure have been described with reference to the accompanying drawings. It should be understood that the above embodiments are merely illustrative, and a person having ordinary skill in the art should understand that the combination of the constituent elements and processes of the embodiments can be modified in various ways, and such modifications also fall within the scope of the present disclosure.

## Claims

1. An optical module, comprising:
an electrical input/output interface;
an optical input/output interface;
an optical transmitting unit configured to convert an input electrical signal received from the electrical input/output interface into an output optical signal;
an optical receiving unit configured to convert an input optical signal received from the optical input/output interface into an output electrical signal; and
a control unit configured to control the optical transmitting unit to perform a conversion of the input electrical signal into the output optical signal and control the optical receiving unit to perform a conversion of the input optical signal into the output electrical signal,
wherein the input electrical signal and the output electrical signal are PCIe electrical signals.

2. The optical module of Claim 1, wherein
the input electrical signal and the output electrical signal are PCIe electrical signals based on a physical layer of a PCIe interface on an external electronic integrated circuit chip or PCIe/CXL electrical signals based on the physical layer of the PCIe interface and a CXL protocol layer.

3. The optical module of Claim 1 or 2, wherein
the input electrical signal comprises a first data electrical signal,
the first data electrical signal has one or more channels, and the optical transmitting unit comprises one or more transmitting channels configured to convert the first data electrical signal into a first data optical signal having one or more channels, and
the input optical signal comprises a second data optical signal.,
the second data optical signal has one or more channels, and the optical receiving unit comprises one or more receiving channels configured to convert the second data optical signal into a second data electrical signal having one or more channels

4. The optical module of Claim 3, wherein
the input electrical signal further comprises a first control electrical signal, and the optical transmitting unit further converts the first control electrical signal into a first control optical signal, and
the input optical signal further comprises a second control optical signal, and the optical receiving unit further converts the second control optical signal into a second control electrical signal.

5. The optical module of Claim 1 or 2, wherein the optical transmitting unit comprises a light emitter and a driver.

6. The optical module of Claim 5, wherein
the light emitter is a directly modulated laser, and the control unit controls an intensity of an optical signal emitted by the optical transmitting unit by controlling an electrical signal provided by the driver, to form the output optical signal.

7. The optical module of Claim 5, wherein
the light emitter is an externally modulated laser, and the optical transmitting unit further comprises a modulator,
the control unit modulates light received from the light emitter by controlling an electrical signal input to the modulator, to form the output optical signal.

8. A photonic-electronic integrated semiconductor structure, comprising:
the optical module of any one of Claims 1-7;
an electronic integrated circuit chip;
a package substrate which at least packages the electronic integrated circuit chip; and
a PCB for arranging the package substrate;
wherein electronic integrated circuit chip has a PCIe physical interface, and the PCIe physical interface of the electronic integrated circuit chip is directly electrically interconnected with the electrical input/output interface of the optical module, and
wherein the PCB is further used to mount the optical module.

9. The photonic-electronic integrated semiconductor structure of Claim 8, wherein
a card slot is arranged at an edge of the PCB, and the optical module is pluggably arranged in the card slot; and
wherein an electrical interconnection between the optical module and the electronic integrated circuit chip is realized through wiring in the package substrate and the PCB.

10. The photonic-electronic integrated semiconductor structure of Claim 8, wherein
a card slot is arranged at an edge of the PCB, and the optical module is pluggably arranged in the card slot; and
wherein an electrical interconnection between the optical module and the electronic integrated circuit chip is realized through wiring in the package substrate and an overhead cable above the PCB.

11. The photonic-electronic integrated semiconductor structure of Claim 8, wherein
the optical module is arranged in a first area of the PCB;
the package substrate is arranged in a second area of the PCB different from the first area; and
wherein an electrical interconnection between the optical module and the electronic integrated circuit chip is realized through wiring in the package substrate and the PCB.

12. The photonic-electronic integrated semiconductor structure of Claim 8, wherein
the electronic integrated circuit chip is arranged in a first area of the package substrate;
the optical module is arranged in a second area of the package substrate different from the first area;
the package substrate is arranged on the PCB; and
wherein an electrical interconnection between the optical module and the electronic integrated circuit chip is realized through wiring in the package substrate.

13. The photonic-electronic integrated semiconductor structure of any one of Claims 8 to 12, wherein
the electronic integrated circuit chip inputs an input electrical signal to the electrical input/output interface of the optical module through the PCIe physical interface, and the optical module converts the received input electrical signal into an output optical signal, and
the optical module converts the input optical signal received from the optical input/output interface into the output electrical signal, and provides the output electrical signal to the electronic integrated circuit chip.

14. An optical switching system, comprising:
one or more optical switches;
a plurality of electronic integrated circuit chips, each of the plurality of electronic integrated circuit chips having a PCIe physical interface; and
a plurality of optical modules of any one of Claims 1-7;
wherein the PCIe physical interface of each electronic integrated circuit chip of the plurality of electronic integrated circuit chips is directly electrically connected with the electrical input/output interface of a corresponding optical module, and the corresponding optical module is connected to the optical switches through an optical fiber.

15. An optical switching system, comprising:
a plurality of servers; and
a plurality of optical switches,
wherein each server of the plurality of servers comprises at least one optical module of any one of Claims 1-7; and
each server is optically interconnected with each optical switch through a corresponding optical module.

16. An optical switching system, comprising:
a plurality of servers; and
at least one optical switch,
wherein each server of the plurality of servers comprises at least one optical module of any one of Claims 1-7;
each server is optically interconnected with at least a part of optical switches in the at least one optical switch through a corresponding optical module; and
at least a part of the plurality of servers are optically interconnected in a point-to-point manner through corresponding optical modules.
